# EUROPÄISCHE PATENTSCHRIFT

(11) **EP 4 399 242 B1**
(45) Veröffentlichungstag und Bekanntmachung des Hinweises auf die Patenterteilung: **08.10.2025**
(21) Anmeldenummer: 22761398.1
(22) Anmeldetag: 15.08.2022
(51) Int. Cl.: C08L 21/00, B60C 1/00, C08K 5/13, C08K 5/43

(54) **SCHWEFELVERNETZBARE GUMMIERUNGSMISCHUNG UND FAHRZEUGLUFTREIFEN**
SULFUR CROSSLINKABLE RUBBER COMPOSITION AND PNEUMATIC TIRE
COMPOSITION DE CAOUTCHOUC RÉTICULABLE AU SOUFRE ET PNEUMATIQUE

(30) Priorität: 06.09.2021 DE 102021209765
(43) Veröffentlichungstag der Anmeldung: 17.07.2024
(73) Patentinhaber: Continental Reifen Deutschland GmbH, 30175 Hannover (DE)
(72) Erfinder: EICHHORST, Christoph, 30175 Hannover (DE); GUARDALABENE, Joseph, 30175 Hannover (DE)
(74) Vertreter: Continental Corporation
(86) Internationale Anmeldenummer: PCT/DE2022/200185
(87) Internationale Veröffentlichungsnummer: WO 2023/030592

(56) Entgegenhaltungen:
- EP-A1- 2 657 281
- DE-A1- 102017 216 070

## Beschreibung

Die Erfindung betrifft eine schwefelvernetzbare Gummierungsmischung für metallische Festigkeitsträger, die zumindest ein Novolak-Harz und zumindest einen Sulfenimidbeschleuniger enthält. Ferner betrifft die Erfindung einen Fahrzeugluftreifen, der zumindest eine solche mit Schwefel vernetzte Gummierungsmischung aufweist.

Für Gummierungsmischungen für metallische Festigkeitsträger, insbesondere vermessingten Stahlcord, ist der Einsatz von Methylenakzeptor-Methylendonor-Paaren als Haftsysteme in den Mischungen bekannt. Bei dem sogenannten Direkthaftverfahren für vermessingten Stahlcord enthält die Gummierungsmischung beispielsweise Cobaltsalze und ein Resorcin-Formaldehyd-Kieselsäuresystem, wobei das Formaldehyd (Methylendonor) in der Regel Formaldehydspendern wie veretherten Melaminharzen entstammt. Zu den veretherten Melaminharzen zählen beispielsweise Hexamethoxymethylmelamin (HMMM) und Hexamethylentetramin (HMT). Als Methylenakzeptoren kommen Resorcin und Resorcinäquivalente oder deren Vorkondensate sowie andere Phenole zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit der Oberfläche des Festigkeitsträgers in haftende Wechselwirkung tritt. Zur weiteren Verbesserung der Haftung verwendet man auch Verstärkerharze und die Mischungen sollten viel Schwefel und weniger Beschleuniger enthalten, damit eine ausreichende mechanische Verzahnung mit der Stahlcordoberfläche erfolgen kann.

Neben Resorcin sind auch spezielle Harze wie z. B. Novolak-Harze als Methylenakzeptoren in Gummierungsmischungen bekannt.

Die US 6,120,911 offenbart cobalthaltige Gummierungsmischungen für metallische Festigkeitsträger, die ein Cashewnuss-modifiziertes Novolak-Harz und einen Sulfenimidbeschleuniger, nämlich N-tert.-Butyl-2-benzothiazolsulfenimid (TBSI), enthalten.

In der US 2010/0200141 A1 werden cobalthaltige Gummierungsmischungen für metallische Festigkeitsträger beschrieben, die N-tert.-Butyl-2-benzothiazolsulfenimid (TBSI) als Vulkanisationsbeschleuniger enthalten.

Aus der EP 2 432 810 B1 sind haftungsverbessernde Gummierungsmischungen für Gummiartikel bekannt, die zumindest ein Novolak-Harz, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und zumindest ein verethertes Melaminharz enthalten. Die Mischungen sollen sich durch gute Härte, Zugfestigkeit und Haftung auszeichnen, wobei auf gesundheits- und umweltgefährdende Systeme auf der Basis von Resorcin verzichtet wird. Die in der EP 2 432 810 B1 beschriebenen Mischungen enthalten als Vulkanisationsbeschleuniger die Sulfenamidbeschleuniger N-tert.-Butyl-2-benzothiazolsulfenamid (TBBS) und N,N-Dicyclohexyl-2-benzothiazolsulfenamid (DCBS).

Der Erfindung liegt die Aufgabe zu Grunde, eine schwefelvernetzbare Gummierungsmischung für metallische Festigkeitsträger bereitzustellen, die hinsichtlich der Haftungseigenschaften nach Alterung verbessert ist und damit zu einer Verbesserung der Haltbarkeit der verstärkten Gummiprodukte führt.

Gelöst wird die Aufgabe erfindungsgemäß dadurch, dass die Gummierungsmischung
- 0,25 bis 5 phr (Gewichtsteile, bezogen auf 100 Gewichtsteile der gesamten Kautschuke in der Mischung) zumindest eines Novolak-Harzes, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und
- 0,5 bis 3 phr zumindest eines Sulfenimidbeschleunigers enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Überraschenderweise hat sich gezeigt, dass sich mit der Kombination eines speziellen Novolak-Harzes mit einem Sulfenimidbeschleunigers in den angegebenen Mengen eine Gummierungsmischung erhalten werden kann, die eine gute Haftung zum Festigkeitsträger auch nach Alterung aufweist.

Durch die Verwendung eines Sulfenimidbeschleunigers kann außerdem auf die Verwendung von Sulfenamidbeschleunigern, die z. T. als gesundheitsgefährdend eingestuft werden, verzichtet werden.

Die Gummierungsmischung 0,25 bis 5 phr, vorzugsweise 1 bis 4 phr, zumindest eines Novolak-Harzes, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist. Es können auch mehrere derartige Harze eingesetzt werden.

Das Novolak-Harz ist durch Reaktion von einer Phenolverbindung mit einem Aldehyd und einem Carbamat-Harz hergestellt. Die Phenolverbindung kann dabei ausgewählt sein aus der Gruppe bestehend aus Phenol, o-, m- und p-Kresol und o-, m- und p-Monoalkylphenolen mit Alkylresten mit bis zu 18 Kohlenstoffatomen. Vorzugsweise ist die Phenolverbindung Phenol. Das Aldehyd kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Das Carbamat-Harz ist durch Reaktion von Alkylurethan mit einem Aldehyd hergestellt. Das Alkylurethan kann dabei ausgewählt sein aus der Gruppe bestehend aus Ethylurethan, Butylurethan, 2-Ethylhexylurethan und Decylurethan. Vorzugsweise ist das Alkylurethan Butylurethan.

Das Aldehyd für das Carbamat-Harz kann ausgewählt sein aus der Gruppe bestehend aus Formaldehyd, Acetaldehyd, Propionaldehyd, Butyraldehyd und Isobutyraldehyd. Vorzugsweise ist das Aldehyd Formaldehyd.

Bei den Aldehyden für das Novolak-Harz und das Carbamat-Harz kann es sich um gleiche oder unterschiedliche Aldehyde handeln.

Für die Gummierungsmischung wird bevorzugt ein Novolak-Harz eingesetzt, welches aus Phenol, Formaldehyd und einem Carbamat-Harz aus Butylurethan und Formaldehyd hergestellt ist (butylcarbamat-funktionalisiertes Phenol-Formaldehydharz).

Die erfindungsgemäße Gummierungsmischung enthält, 0,5 bis 3 phr, vorzugsweise 1 bis 2 phr, zumindest eines Sulfenimidbeschleunigers. Bei Sulfenimidbeschleunigern handelt es sich um Vulkanisationsbeschleuniger, die auf primären Aminen basieren. Im Gegensatz dazu basieren Sulfenamidbeschleuniger wie DCBS (N,N'-Dicyclohexyl-2-benzothiazolsulfenamid) oder MBS (N-Oxydiethylen-2-benzothiazolsulfenamid) auf sekundären Aminen. Es können ein oder mehrere Sulfenimidbeschleuniger in der Mischung enthalten sein.

Für ein besonders gute Alterungsbeständigkeit der Festigkeitsträger-Gummi-Haftung auch unter Sauerstoff handelt es sich bei dem Sulfenimidbeschleuniger um N-tert.-Butyl-2-benzothiazolsulfenimid (TBSI, IUPAC-Bezeichnung: N,N-bis(1,3-Benzothiazol-2-ylsulfanyl)-2-methylpropan-2-amin).

Gemäß einer bevorzugten Weiterbildung der Erfindung enthält die Gummierungsmischung 1 bis 8 phr zumindest eines veretherten Melaminharzes, vorzugsweise Hexamethoxymethylmelamin (HMMM) und/oder Hexamethylentetramin (HMT). Auf diese Weise kann die Haftung zwischen Gummimischung und Festigkeitsträger weiter verbessert werden. Besonders bevorzugt ist das veretherte Melaminharz Hexamethoxymethylmelamin (HMMM). Dies ist ein übliches, auf dem Markt erhältliches Melaminharz, das ein gutes Harznetzwerk ausbildet. HMMM wird beispielsweise als technisches Produkt - oft auf einem inerten Träger - mit einem Methylierungsgrad < 6 eingesetzt.

Die erfindungsgemäße Gummierungsmischung kann 1 bis 10 phr Resorcin und/oder resorcinbasierte Methylenakzeptoren enthalten. Zur Vermeidung von verarbeitungstechnischen Nachteilen und im Hinblick auf ökologische Aspekte hat es sich als vorteilhaft erwiesen, wenn die Gummierungsmischung im Wesentlichen frei von Resorcin ist. Resorcin und resorcinbasierte Methylenakzeptoren weisen im Hinblick auf die Arbeitssicherheit und den Umweltschutz Nachteile auf.

Für eine weitere Verbesserung der Haftung zwischen Festigkeitsträger und Gummierung als vorteilhaft erwiesen, wenn die Gummierungsmischung zumindest ein organisches Cobaltsalz enthält. Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, -rhodinat, -octoat, -adipat usw. verwendet werden.

Vorzugsweise handelt es sich bei den metallischen Festigkeitsträgern um vermessingten Stahlcord. Die Messingoberfläche bewirkt durch die Bildung von Kupfersulfiddendriten eine gute chemische und mechanische Verzahnung mit der angrenzenden Gummierungsmischung.

Die schwefelvernetzbare Gummierungsmischung enthält weitere in der Kautschukindustrie übliche Bestandteile, insbesondere zumindest einen Kautschuk.

Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Enthält die Gummierungsmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte StyrolButadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die StyrolButadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Gummierungsmischung kann als Verarbeitungshilfsmittel und zur Mischungsverbilligung auch Regenerat (Reclaim) zugesetzt werden.

Die Gummierungsmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Gummierungsmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Gummierungsmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Gummierungsmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Gummierungsmischung zugesetzt.

Des Weiteren kann die Gummierungsmischung neben den Sulfenimidbeschleunigern weitere vulkanisationsbeeinflussende Substanzen wie weitere Vulkanisationsbeschleuniger, Vulkanisationsverzögerer und Vulkanisationsaktivatoren in üblichen Mengen enthalten. Vorzugsweise enthält die Gummierungsmischung neben den Sulfenimidbeschleunigern weniger als 0,5 phr andere Vulkanisationsbeschleuniger.

Die Herstellung der erfindungsgemäßen Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Gummierungsmischung kann in unterschiedlichsten Gummiprodukten, in denen Festigkeitsträger vorhanden sind, eingesetzt werden. Bei diesen Gummiprodukten kann es sich z. B. um Antriebsriemen, Fördergurte, Schläuche, gummierte Gewebe oder Luftfedern handeln.

Vorzugsweise wird die Gummierungsmischung in Fahrzeugluftreifen eingesetzt.

Die Gummierungsmischung kann zur Gummierung unterschiedlichster Reifenbauteile mit metallischen Festigkeitsträgern, wie dem Wulstkern, den Wulstabdeckungen, den Wulstverstärkern, dem Gürtel, der Karkasse oder den Gürtelbandagen, eingesetzt werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Gummierungsmischung als Gürtelgummierungsmischung eingesetzt werden, wo die guten Haftwerte zwischen Festigkeitsträger und Gummierungsmischung, auch unter Alterung, zu einer hohen Lebensdauer des Fahrzeugluftreifens führen.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Gummierungsmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand der nachstehenden Tabelle näher erläutert werden.

In Tabelle 1 werden Mischungen für eine Gummierung von Stahlcord gezeigt, bei denen unterschiedliche Vulkanisationsbeschleuniger (DCBS und TBSI) und unterschiedliche Novolak-Harze (Phenol-Formaldehyd-Harze ohne und mit erfindungsgemäßer Carbamat-Funktionalisierung) eingesetzt werden.

Die Mischungsherstellung erfolgte unter üblichen Bedingungen unter Herstellung einer Grundmischung und anschließend der Fertigmischung in einem Labortangentialmischer.

Aus den Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN ISO 7619-1
- Rückprallelastizität bei Raumtemperatur gemäß DIN 53 512
- Spannungswert bei 300% Dehnung bei Raumtemperatur gemäß DIN 53 504
- Bruchdehnung bei Raumtemperatur gemäß DIN 53504

Ferner wurden mit den Mischungen aus der Tabelle 1 Versuche zur Haftung an vermessingtem Stahlcord (1+5x0,4 HT) gemäß ASTM 2229/D1871 ohne Alterung und nach zweitätiger Alterung in Sauerstoff bei 70 °C vorgenommen (Vulkanisation: 30 min, 150 °C, Einbettlänge in die Gummierungsmischung: 10 mm, Auszugsgeschwindigkeit: 125 mm/min). Es wurden die Herausziehkraft und die Bedeckung bestimmt.

Bei allen ermittelten Eigenschaften wurde der gemessene Wert der Mischung 1 als 100 % gesetzt; die Werte der anderen Mischungen wurden auf die Mischung 1 bezogen.

**Tabelle 1**

| **Bestandteile** | **Einheit** | **1** | **2** | **3** | **4** | **5** | **6** |
|---|---|---|---|---|---|---|---|
| Naturkautschuk | phr | 80 | 80 | 80 | 80 | 80 | 80 |
| Polybutadien | phr | 20 | 20 | 20 | 20 | 20 | 20 |
| Kieselsäure | phr | 60 | 60 | 60 | 60 | 60 | 60 |
| Weichmacher, Prozesshilfsmittel, Silankupplungsagenz | phr | 12,65 | 12,65 | 12,65 | 12,65 | 12,65 | 12,65 |
| Zinkoxid | phr | 8 | 8 | 8 | 8 | 8 | 8 |
| Alterungsschutzmittel | phr | 4,6 | 4,6 | 4,6 | 4,6 | 4,6 | 4,6 |
| Cobalt-borat-alkanoat | phr | 0,4 | 0,4 | 0,4 | 0,4 | 0,4 | 0,4 |
| HMMM^{a)} | phr | 3,85 | 3,85 | 3,85 | 3,85 | 3,85 | 3,85 |
| Resorcin | phr | 2,5 | - | - | 2,5 | - | - |
| Phenol-Formaldehydharz^{b)} | phr | - | 2,5 | - | - | 2,5 | - |
| butylcarbamat-funktionalisiertes Phenol-Formaldehydharz^{c)} | phr | - | - | 2,5 | - | - | 2,5 |
| DCBS | phr | 1,5 | 1,5 | 1,5 | - | - | - |
| TBSI | phr | - | - | - | 1,5 | 1,5 | 1,5 |
| Schwefel (67 %ig) | phr | 6,45 | 6,45 | 6,45 | 6,45 | 6,45 | 6,45 |

| **Eigenschaften** | | | | | | | |
|---|---|---|---|---|---|---|---|
| Härte bei RT | % | 100 | 100 | 101 | 100 | 99 | 98 |
| Rückprallelast. bei RT | % | 100 | 98 | 100 | 100 | 98 | 100 |
| Zugfestigkeit bei RT | % | 100 | 98 | 99 | 107 | 92 | 91 |
| Bruchdehnung | % | 100 | 119 | 97 | 93 | 99 | 101 |
| Herausziehkraft (ungealtert) | % | 100 | 105 | 98 | 93 | 104 | 103 |
| Herausziehkraft (sauerstoff-gealtert) | % | 100 | 106 | 97 | 99 | 104 | 110 |
| Bedeckung (ungealtert) | % | 100 | 96 | 102 | 101 | 99 | 100 |
| Bedeckung (sauerstoff-gealtert) | % | 100 | 99 | 100 | 100 | 100 | 100 |

| | | | | | | | |
|---|---|---|---|---|---|---|---|
| ^{a)} Hexamethoxymethylmelamin 65 %ig auf Kieselsäure ^{b)} Elaztobond^{®} A250LP der Firma SI Group, USA ^{c)} Alnovol ^{®} PN 760/Past der Firma Allnex Netherlands B. V. | | | | | | | |

Bei den erfindungsgemäßen Stahlcordgummierungen 6 der Tabelle 1 ist eine deutliche Verbesserung der Haftungseigenschaften erzielt werden, die besonders nach Sauerstoffalterung im Vergleich zu Vergleichsmischungen 1 bis 5 verbessert ist. Diese Verbesserung tritt nur ein, wenn sowohl das butylcarbamat-funktionalisiertes Phenol-Formaldehydharz als auch das TBSI in der Mischung enthalten sind. Die Einzelmaßnahmen gemäß Mischungen 3 und 4 und die Verwendung eines anderen Phenol-Formaldehydharzes ohne Butylcarbamat-Funktionalisierung gemäß Mischungen 2 und 5 führen nicht zu einer derartigen Verbesserung.

Die Verbesserung der Haftungseigenschaften führt letztendlich bei den Gummiprodukten mit entsprechend gummierten metallischenFestigkeitsträgern zu einer besseren Haltbarkeit.

## Patentansprüche

1. Schwefelvernetzbare Gummierungsmischung für metallische Festigkeitsträger, enthaltend
- 0,25 bis 5 phr (Gewichtsteile, bezogen auf 100 Gewichtsteile der gesamten Kautschuke in der Mischung) zumindest eines Novolak-Harzes, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, und
- 0,5 bis 3 phr zumindest eines Sulfenimidbeschleunigers.

2. Schwefelvernetzbare Gummierungsmischung nach Anspruch 1, **dadurch gekennzeichnet, dass** sie
- 1 bis 4 phr zumindest eines Novolak-Harzes, welches Alkylurethaneinheiten aufweist und durch Reaktion von einer Phenolverbindung, einem Aldehyd und einem Carbamat-Harz hergestellt ist, wobei das Carbamat-Harz durch Reaktion von Alkylurethan mit einem Aldehyd hergestellt ist, enthält.

3. Schwefelvernetzbare Gummierungsmischung nach Anspruch 1 oder 2,
**dadurch gekennzeichnet, dass** die Phenolverbindung Phenol ist.

4. Schwefelvernetzbare Gummierungsmischung nach zumindest einem der vorhergehenden Ansprüche, **dadurch gekennzeichnet, dass** das Alkylurethan Butylurethan ist.

5. Schwefelvernetzbare Gummierungsmischung nach zumindest einem der vorhergehenden Ansprüche, **dadurch gekennzeichnet, dass** das Aldehyd Formaldehyd ist.

6. Schwefelvernetzbare Gummierungsmischung nach zumindest einem der vorhergehenden Ansprüche, **dadurch gekennzeichnet, dass** sie 1 bis 2 phr zumindest eines Sulfenimidbeschleunigers enthält

7. Schwefelvernetzbare Gummierungsmischung nach zumindest einem der vorhergehenden Ansprüche, **dadurch gekennzeichnet, dass** der Sulfenimidbeschleuniger N-tert.-Butyl-2-benzothiazolsulfenimid (TBSI) ist.

8. Schwefelvernetzbare Gummierungsmischung nach zumindest einem der vorhergehenden Ansprüche, **dadurch gekennzeichnet, dass** sie 1 bis 8 phr zumindest eines veretherten Melaminharzes enthält.

9. Schwefelvernetzbare Gummierungsmischung nach zumindest einem der vorhergehenden Ansprüche, **dadurch gekennzeichnet, dass** sie zumindest ein organisches Cobaltsalz enthält.

10. Schwefelvernetzbare Gummierungsmischung nach zumindest einem der vorhergehenden Ansprüche, **dadurch gekennzeichnet, dass** der metallische Festigkeitsträger ein vermessingter Stahlcord ist.

11. Fahrzeugluftreifen, der eine mit Schwefel vernetzte Gummierungsmischung gemäß Anspruch 1 aufweist.

12. Fahrzeugluftreifen nach Anspruch 11, **dadurch gekennzeichnet, dass** er eine Gürtelgummierung aus der Gummierungsmischung aufweist.

## Claims

1. Sulfur-crosslinkable rubberization mixture for metallic strength members containing
- 0.25 to 5 phr (parts by weight, based on 100 parts by weight of the total rubbers in the mixture) of at least one novolac resin which comprises alkylurethane units and is produced by reaction of a phenolic compound, an aldehyde and a carbamate resin, wherein the carbamate resin is produced by reaction of alkylurethane with an aldehyde, and
- 0.5 to 3 phr of at least one sulfenimide accelerator.

2. Sulfur-crosslinkable rubberization mixture according to Claim 1, **characterized in that** it contains
- 1 to 4 phr of at least one novolac resin which comprises alkylurethane units and is produced by reaction of a phenolic compound, an aldehyde and a carbamate resin, wherein the carbamate resin is produced by reaction of alkylurethane with an aldehyde.

3. Sulfur-crosslinkable rubberization mixture according to Claim 1 or 2, **characterized in that** the phenolic compound is phenol.

4. Sulfur-crosslinkable rubberization mixture according to at least one of the preceding claims, **characterized in that** the alkylurethane is butylurethane.

5. Sulfur-crosslinkable rubberization mixture according to at least one of the preceding claims, **characterized in that** the aldehyde is formaldehyde.

6. Sulfur-crosslinkable rubberization mixture according to at least one of the preceding claims, **characterized in that** it contains 1 to 2 phr of at least one sulfenimide accelerator.

7. Sulfur-crosslinkable rubberization mixture according to at least one of the preceding claims, **characterized in that** the sulfenimide accelerator is N-tert-butyl-2-benzothiazolesulfenimide (TBSI).

8. Sulfur-crosslinkable rubberization mixture according to at least one of the preceding claims, **characterized in that** it contains 1 to 8 phr of at least one etherified melamine resin.

9. Sulfur-crosslinkable rubberization mixture according to at least one of the preceding claims, **characterized in that** it contains at least one organic cobalt salt.

10. Sulfur-crosslinkable rubberization mixture according to at least one of the preceding claims, **characterized in that** the metallic strength member is a brass-plated steel cord.

11. Pneumatic vehicle tyre comprising a sulfur-crosslinked rubberization mixture according to Claim 1.

12. Pneumatic vehicle tyre according to Claim 11, **characterized in that** it comprises a belt rubberization composed of the rubberization mixture.

## Revendications

1. Mélange d'engommage réticulable au soufre pour renforts métalliques, contenant
- 0,25 à 5 phr (parties en poids, par rapport à 100 parties en poids de l'ensemble des caoutchoucs dans le mélange) d'au moins une résine novolaque qui comporte des unités alkyluréthane et est préparée par réaction d'un composé phénolique, d'un aldéhyde et d'une résine carbamate, la résine carbamate étant préparée par réaction d'alkyluréthane avec un aldéhyde, et
- 0,5 à 3 phr d'au moins un accélérateur sulfénimide.

2. Mélange d'engommage réticulable au soufre selon la revendication 1, **caractérisé en ce qu'**il contient
- 1 à 4 phr d'au moins une résine novolaque qui comporte des unités alkyluréthane et est préparée par réaction d'un composé phénolique, d'un aldéhyde et d'une résine carbamate, la résine carbamate étant préparée par réaction d'alkyluréthane avec un aldéhyde, et

3. Mélange d'engommage réticulable au soufre selon la revendication 1 ou 2, **caractérisé en ce que** le composé phénolique est le phénol.

4. Mélange d'engommage réticulable au soufre selon au moins l'une quelconque des revendications précédentes, **caractérisé en ce que** l'alkyluréthane est le butyluréthane.

5. Mélange d'engommage réticulable au soufre selon au moins l'une quelconque des revendications précédentes, **caractérisé en ce que** l'aldéhyde est le formaldéhyde.

6. Mélange d'engommage réticulable au soufre selon au moins l'une quelconque des revendications précédentes, **caractérisé en ce qu'**il contient de 1 à 2 phr d'au moins un accélérateur sulfénimide.

7. Mélange d'engommage réticulable au soufre selon au moins l'une quelconque des revendications précédentes, **caractérisé en ce que** l'accélérateur sulfénimide est le N-tert-butyl-2-benzothiazolesulfénimide (TBSI).

8. Mélange d'engommage réticulable au soufre selon au moins l'une quelconque des revendications précédentes, **caractérisé en ce qu'**il contient de 1 à 8 phr d'au moins une résine mélamine éthérifiée.

9. Mélange d'engommage réticulable au soufre selon au moins l'une quelconque des revendications précédentes, **caractérisé en ce qu'**il contient au moins un sel de cobalt organique.

10. Mélange d'engommage réticulable au soufre selon au moins l'une quelconque des revendications précédentes, **caractérisé en ce que** le renfort métallique est un câble en acier laitonné.

11. Pneumatique de véhicule, qui comporte un mélange d'engommage réticulé au soufre selon la revendication 1.

12. Pneumatique de véhicule selon la revendication 11, **caractérisé en ce qu'**il comporte un engommage de carcasse à base du mélange d'engommage.
